Europäisches Patentamt

(19) European Patent Office

Office européen des brevets

(11) Publication number: **0 285 202 B1**

(12) **EUROPEAN PATENT SPECIFICATION**

(45) Date of publication of patent specification:
12.06.91 Bulletin 91/24

(51) Int. Cl.⁵: **E02D 17/20, A01G 9/02**

(21) Application number: **88200485.6**

(22) Date of filing: **15.03.88**

(54) **Process for contouring garden and landscape.**

(30) Priority: **17.03.87 NL 8700636**

(43) Date of publication of application:
**05.10.88 Bulletin 88/40**

(45) Publication of the grant of the patent:
**12.06.91 Bulletin 91/24**

(84) Designated Contracting States:
**BE DE FR GB LU NL**

(56) References cited:
**WO-A-85/03317**
**DE-A- 3 409 823**
**FR-A- 2 380 378**
**FR-A- 2 570 422**
**GB-A- 1 417 479**

(56) References cited:
**US-A- 2 113 523**
**PATENT ABSTRACTS OF JAPAN, vol. 10, no. 381 (M-547)[2483], 19th December 1986, page 115 M 547; & JP-A-61 172 922 (NITTOKU KENSETSU K.K.) 04-08-1986**

(73) Proprietor: **POLYDAK B.V.**
**Graaf Huibertlaan 8**
**NL-4121 EP Everdingen (NL)**

(72) Inventor: **Teijgeler, Philip Henri Wilhelm**
**Graaf Huibertlaan 8**
**NL-4121 EP Everdingen (NL)**

(74) Representative: **Baarslag, Aldert D. et al**
**Nederlandsch Octrooibureau**
**Scheveningseweg 82 P.O. Box 29720**
**NL-2502 LS 's-Gravenhage (NL)**

## Description

The present invention relates to a process for forming part of a garden, for changing a landscape or for manufacturing a garden- or landscape-element, by adding a plastic sheet material having tensile strength, to a plurality of supports between and/or over which said sheet extends in a form allowing space for plants.

Such a process is known from DE-A-34 09 823. According to said known process a sheet material made from glass fibre reinforced synthetic resin is supported at regular intervals on posts, such that a freely hanging regular shaped surface is obtained. This material has sufficient tensile strength to support a filling with soil and plants. This material is relatively stiff. It cannot be folded in any desired shape once the resin is hardened.

Purpose of the invention is to provide a process by means of which it becomes possible to contour garden and landscape without any limitations as regards steepness of slope and shape of the garden or landscape.

According to the invention this purpose is achieved in that a sheet material is used having a flexibility such that it can be folded in any irregular shape, which sheet material between and/or over the supports is folded and attached such that a structure is formed in which folded and facing surfaces of the sheet material of the folds are locally attached to form clefts.

By using a flexible sheet material all kinds of shapes or slopes are possible. Rock formations can be obtained without one having to cope with the problem of the weight of rock. This opens the possibility for garden or landscape structures with all kinds of spaces such as recesses for growing plants and for creating water-streams, water-basins, waterfalls and the like.

This is not possible with the relatively rigid sheet material of the above-mentioned prior art.

Folds also can be made by attaching profiles to the supports having inwardly curved portions into which the sheet material is bent or folded and attached.

If needed sections can be attached to the supports having parallel flanges which slant towards each other and folds are made in the flexible sheet material by folding said sheet material into the space between the said flanges. This is only one of the possibilities of making folds quickly.

The process of the invention opens the possibility to manufacture part of a landscape which can function as a sound barrier, wind-brake and/or privacy screen.

Apart from using posts and the like as supports it of course is possible to give local support to the sheet material by means of fillings of for instance sand or hardening material.

It also is possible by means of the invention to manufacture an element in the form of a support formed by a frame, which frame may have wheels, and which frame carries the sheet material in a manner which has the appearance of a rock formation with a plurality of spaces for holding plants. Such an element is useful for decoration purposes for instance at exhibitions or in for instance flower-shops.

As sheet material according to the invention plastic sheet is preferred of the cross-linked type. This means that the sheet material is stretched in two perpendicular directions so that it has strength in both directions. Cross-linked means that the sheet material comprises two adhered sheets, one stretched in one direction and the other in a perpendicular direction.

The invention will be described further with reference to the drawings.

Figure 1 shows part of a gently sloping artificial rocky bottom.

Figure 2 shows part of a wall with a rugged side

Figure 3 shows a detail of a wall with a section for forming a crevice.

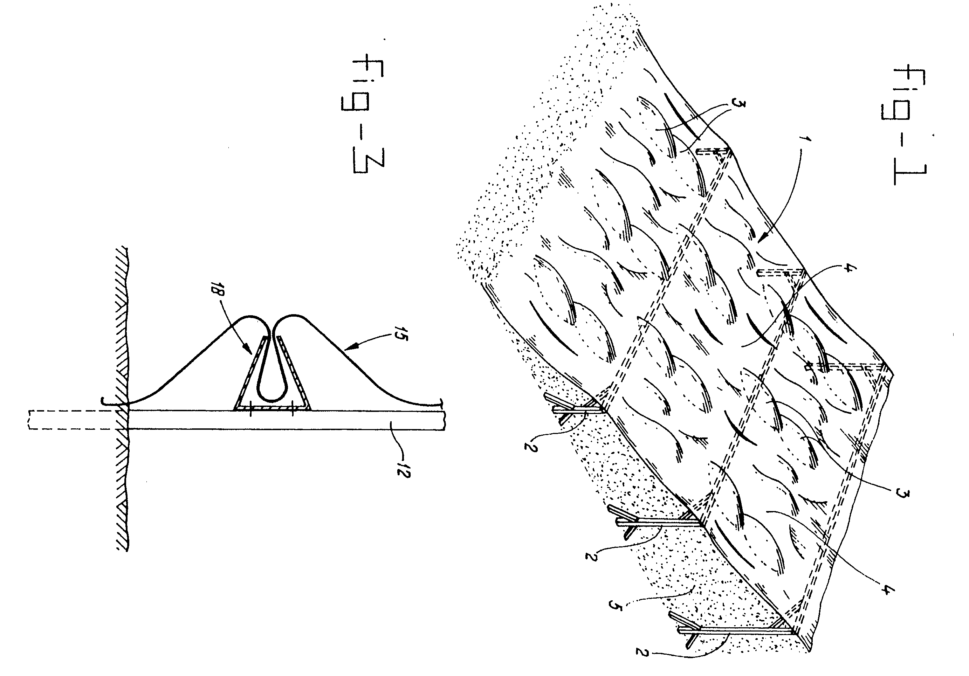

In figure 1 the flexible sheeting material, for example a plastic sheet 1, is supported at various points by supports 2. In the illustration the heights of these supports 2 are selected in such a way that a slope is obtained. Other surface shapes can, of course, also be obtained by selecting other lengths for the supports 2. The plastic sheet can be placed between these supports in various shapes, depending on the desired appearance of the surface. In this case the plastic sheet is formed falling freely into folds 3 and dips 4, so that an irregular surface resembling a rocky bottom is obtained. These folds can be at least partially glued or welded to each other, so that they have a permanent shape.

Below the plastic sheet is, for example, sand 5, which provides a complete and solid support for the plastic sheet thus shaped. This means that the surface can take quite high local stresses. The impression of a rocky bottom can be further enhanced by providing the plastic sheet with the desired colours

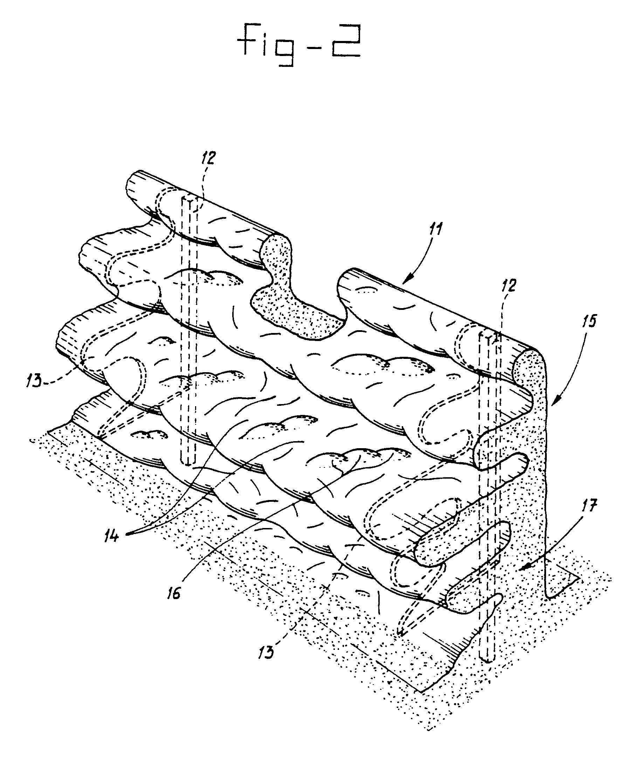

Figure 2 shows yet another object which can be made according to the invention. This object is in the form of a wall 11. This wall 11 consists of posts 12 fixed in the ground, to which shaped parts 13 pointing in the transverse direction of the wall are attached. These shaped parts 13 have the contour which is desired for the wall to be shaped, in the figure for example with crevices 14. The shaped parts 13 need not all have the same contour ; the plastic sheet 15 is flexible enough to absorb transition differences between the contours. Here again the sheet can have folds 16.

The wall can be provided on both sides with crevices 14 ; the shaped parts 13 are provided on both sides with a contour which is suitable for this.

Finally, the wall is filled with, for example, sand 17, by means of which a sturdy piece of work is obtained. Such a wall filled with sand also has good soundproofing

The crevices 14 can be used, for example, for planting plants. For this purpose, a suitable substrate such as earth is placed in the crevices 14, in which the plants can take root.

Use can also be made here of the section 18 shown in figure 3, which is fixed between the posts 12. The plastic sheet 15 can be inserted between the flanges which face each other. Here again, plants and soil can be placed in the hollows formed by the plastic sheet.

## Claims

1. Process for forming part of a garden, for changing a landscape or for manufacturing a garden- or landscape-element, by adding a plastic sheet material (1) having tensile strength, to a plurality of supports (2, 5) between and/or over which said sheet extends in a form allowing space (14, 20) for plants, characterized in that a sheet material is used having a flexibility such that it can be folded in any irregular shape, which sheet material between and/or over the supports is folded and attached such that a structure is formed in which folded and facing surfaces of the sheet material of the folds are locally attached to form clefts.

2. Process as claimed in claim 1, characterized in that the sheet material of the structure is folded inwardly against inner recesses of a profiled element (13) attached to the supports (12).

3. Process as claimed in claims 1 or 2, characterized in that in said clefts or folds a substrate is placed for plants.

4. Process as claimed in any one of the preceding claims, characterized in that sections (18) are attached to the support having parallel flanges which slant towards each other and that folds are made in the flexible sheet material by folding said sheet material into the space between the said flanges.

## Ansprüche

1. Verfahren zur Gestaltung eines Teiles eines Gartens, zum Ändern einer Landschaft oder zum Herstellen eines Garten- oder Landschaftselements, durch Anbringen eines zugfesten Kunststoffolienmaterials (1) an einer Mehrzahl von Trägern (2, 5) zwischen denen und/oder über die sich die Folie in einer Form erstreckt, die einen Raum (14, 20) für Pflanzen gewährt, **dadurch gekennzeichnet,** daß ein Folienmaterial verwendet wird, welches eine solche Flexibilität hat, daß es in irgendeine unregelmäßige Form gefaltet werden kann, und daß das Folienmaterial zwischen und/oder über den Trägern derart gefaltet und befestigt wird, daß eine Struktur gebildet wird, in der gefaltete und einander zugekehrte Oberflächen des Folienmaterials der Falten zur Bildung von Spalten örtlich befestigt sind.

2. Verfahren nach Anspruch 1, **dadurch gekennzeichnet,** daß das Folienmaterial der Struktur nach innen gegen innere Vertiefungen eines an den Trägern (12) angebrachten profilierten Elements (13) gefaltet wird.

3. Verfahren nach Anspruch 1 oder 2, **dadurch gekennzeichnet,** daß in den Spalten oder Falten ein Substrat für Pflanzen angeordnet wird.

4. Verfahren nach einem der vorhergehenden Ansprüche, **dadurch gekennzeichnet,** daß an den Trägern Profile (18) angebracht werden, die parallele Flansche aufweisen, die aufeinander zu geneigt sind und daß in dem flexiblen Folienmaterial dadurch Falten gebildet werden, daß das Folienmaterial in den Raum zwischen den Flanschen gefaltet wird.

## Revendications

1. Procédé pour former une partie d'un jardin, pour modifier un paysage ou pour réaliser un élément de jardin ou de paysage, en ajoutant une feuille de matière plastique (1) douée de résistance à la traction à une pluralité de supports (2, 5) entre lesquels et/ou sur lesquels ladite feuille s'étend sous une forme procurant un espace (14, 20) pour des plantes, **caractérisé** en ce que l'on utilise une feuille de matière ayant une souplesse telle qu'elle peut être pliée sous une forme irrégulière, cette feuille de matière entre et/ou sur les supports étant pliée et fixée de telle sorte qu'une structure est réalisée dans laquelle les surfaces pliées et en regard l'une de l'autre de la feuille de matière des plis sont fixées localement de manière à constituer des fissures.

2. Procédé selon la revendication 1, **caractérisé** en ce que l'on plie la feuille de matière de la structure vers l'intérieur contre des évidements intérieurs d'un élément profilé (13) fixé aux supports (12).

3. Procédé selon les revendications 1 ou 2, **caractérisé** en ce que dans lesdites fissures ou plis on place un substrat pour des plantes.

4. Procédé selon l'une quelconque des revendications précédentes, **caractérisé** en ce que l'on fixe au support des profilés (18) comportant des ailes parallèles qui s'inclinent en direction l'une de l'autre et que l'on forme des plis dans la feuille de matière souple en insérant par pliage ladite feuille de matière dans l'espace entre lesdites ailes.

fig-1

fig-3

# fig-2